# EUROPÄISCHE PATENTSCHRIFT

(11) **EP 0 385 495 B1**
(45) Veröffentlichungstag und Bekanntmachung des Hinweises auf die Patenterteilung: **12.01.1994**
(21) Anmeldenummer: 90104094.9
(22) Anmeldetag: 02.03.1990
(51) Int. Cl.: B23B 27/04

(54) **Halter für spanabhebende Werkzeug-Einsätze**
Tool holder for cutting inserts
Porte-outil pour plaquettes de coupe

(30) Priorität: 03.03.1989 DE 3906822
(43) Veröffentlichungstag der Anmeldung: 05.09.1990
(73) Patentinhaber: ZINNER GmbH PRÄZISIONSWERKZEUGE, D-90431 Nürnberg (DE)
(72) Erfinder: Zinner, Karl,, D-8500 Nürnberg 80 (DE)
(74) Vertreter: Matschkur, Götz, Lindner Patent- und Rechtsanwälte

(56) Entgegenhaltungen:
- EP-A- 0 095 062
- AT-B- 316 259
- AT-B- 381 262
- DD-A- 218 850
- DE-A- 3 044 790
- US-A- 246 703

## Beschreibung

Die Erfindung betrifft einen Halter mit Aufspreizschlüssel und einem Spanabhebenden Werkzeugeinsatz gemäß erstem Teil des Anspruchs 1, siehe AT-B-316259.

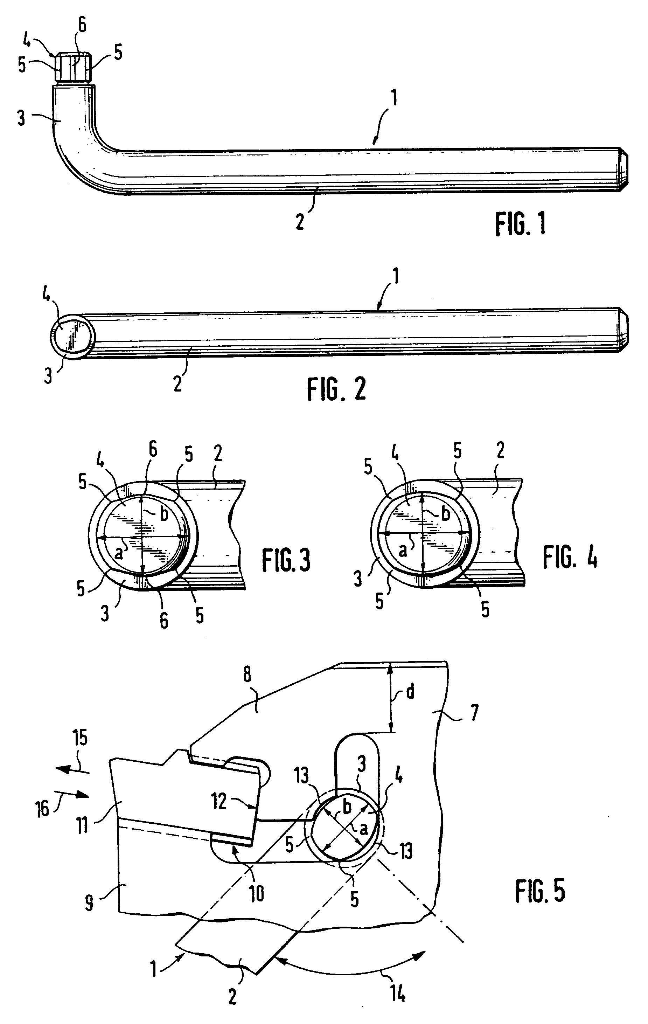

Aus der DE-OS 34 20 653 ist entnehmbar, einen Klemmschlitz 2 des Werkzeugträgers 1 am Ende in eine kreisförmige Öffnung 3 zu erweitern (vgl. dort Fig. 1), in die gemäß dortige Figuren 4 und 5 eine Verriegelungsplatte 12 mit zwei entsprechend kreisförmigen Verriegelungsleisten 13, 15 einsetzbar ist. Diese besitzt eine Sechskant-Bohrung 17, über welche sie - mittels eines entsprechenden sechskantigen Schlüssels - entweder in die Entriegelungsstellung (vgl. Fig. 4) oder Verriegelungsstellung (Fig. 5) verstellbar ist. Ein solcher zusätzlicher Aufwand ist nach einer Ausbildung der Erfindung (siehe unten) vermieden, weil hiernach das spezifische Querschnittsprofil mit dem Schlüssel selbst baulich vereint ist.

Gemäß DE-OS 31 33 029 wird ein Klemmschlitz 106 eines Werkzeughalters mittels eines Nockenteils 130 verengt. Das Nockenteil 130 besitzt kreisrundes Querschnittsprofil, das ein abgeflachtes Segment 132 aufweist. Auch hier ist wieder eine Sechskant-Öffnung 131 für einen gesonderten Schlüssel vorgesehen, um die gegenüberliegenden Klemmflächen 108, 110 des Klemmschlitzes aufeinander zuzubewegen.

Die DE-OS 30 44 790 zeigt in Fig. 4 einen Auswurfhebel 15 mit einem Auswurfansatz 16, der zum Einsatz in die Aussparung 6 des Werkzeughalters 1 gedacht ist. Die Aussparung 6 besitzt wiederum kreisförmiges Profil, während der Auswurfansatz 16 im wesentlichen länglich ausgestaltet ist. Er besitzt langgestreckte parallel verlaufende Seiten, die an ihren entgegengesetzten Enden jeweils durch eine rundliche Biegung verbunden sind. Die Längsstreckung hat den Sinn, bei Verdrehen des Handgriffs 14 den Auswurfansatz 16 mit seiner rundlichen Schmalseite bzw. Biegung gegen den Rücken des Schneideinsatzes 8 zu drücken, so daß dieser aus seinem Klemmsitz frei herausgeworfen wird.

Die aus der Patentveröffentlichung EP 259 847 entnehmbare Lehre stimmt im wesentlichen mit der nach obiger DE-OS 31 33 029 überein. Wie in der Zeichnung dargestellt, ist in der Bohrung 16 ein Keilelement 17 eingesetzt, das mittels der Schraube 18 derart verstellt werden kann, daß die (obere) Klemmbacke 7 in Richtung des Pfeiles 19 gegen den Schneideinsatz S verschwenkt werden kann, wodurch dieser in seinem Klemmschlitz 6 festgeklemmt wird. In Spalte 3, Zeile 42 dieser Entgegenhaltung wird dem Fachmann die Anregung gegeben, daß Keilelement 17 als Exzenter oder Konus auszubilden. Die das Keilelement aufnehmende Bohrung 16 ist mit kreisförmigen Querschnittsprofil versehen.

Gabelartig geschlitzte Halterplatten der eingangs genannten Art sind bekannt aus dem europ. Patent 0 095 062: Das Aufspreizen des einen Klemmbackens relativ zum anderen, gegenüberliegenden Klemmbacken wird durch Einlegen und Verdrehen eines elliptischen Schlüssels in dem oval ausgeformten Bereich des Klemmschlitzes (ovaler Schlitzbereich) bewirkt. Bei diesem bekannten Halter ist allerdings eine genaue geometrische Form für den ovalen Schlitzbereich nicht näher spezifiziert, und mithin läßt sich bei diesem Haltersystem eine übermäßige Aufspreizung des Klemmschlitzes, bei der die Streckgrenze des Materials überschritten wird, nicht mit Sicherheit vermeiden. Vielmehr kann es zu dauernden Verformungen insbesondere der gegenüberliegenden Klemmbacken kommen, mit der Folge, daß eine stabile Klemmung der Werkzeug-Einsätze nicht mehr gewährleistet ist. Zudem ist bei der bekannten Ausführung aufgrund des Profilverlaufs des ovalen Schlitzbereichs, der nur grob an die Ellipsenform des Aufspreizschlüssels angepaßt ist, die Leichtigkeit des Einsteckens und/oder des Verdrehens des Schlüsselbartes erschwert.

Hieraus folgt die der Erfindung zugrundeliegende Aufgabe, unter Vermeidung der genannten Nachteile einen durch elliptischen Schlüssel aufspreizbaren Halter für Werkzeug-Einsätze zu schaffen, der beim Wechsel der Einsätze eine hohe Zuverlässigkeit und eine leichte Handhabbarkeit aufweist und Materialverschleiß, -ermüdung sowie dauernde Materialverformungen vermeidet. Zur Lösung werden bei einem Halter mit den eingangs genannten Merkmalen die im zweiten, kennzeichnenden Teil des Anspruchs 1 genannten Maßnahmen vorgeschlagen.

Mit diesen Maßnahmen wird einerseits erreicht, daß der Aufspreizschlüssel bei bestimmter Winkelstellung besonders leicht in den ovalen Schlitzbereich eingeführt werden kann. Dies ist dann der Fall, wenn die schwächer gekrümmten Teile des elliptischen Querschnittsprofils des Schlüssels den genannten Aussparungen gegenüberliegen; denn die Aussparungen sind so beabstandet, daß die dazwischenliegende Entfernungsstrecke größer als die kleinere Achse der Ellipsen-Querschnittsform ist. Andererseits kann der Schlüssel nach seinem Einstecken leicht verdreht werden, weil die Aussparungen in ihrem Verlauf den stärker gekrümmten Teilen des elliptischen Querschnittsprofils entsprechen; beim Bewirken des Aufspreizeffektes können deshalb die Aussparungen und die stärker gekrümmten Außenflächen des elliptischen Querschnitts in formbündigen Eingriff miteinander kommen, wobei Verdrehen behindernde Reibungseffekte vermieden sind. Schließlich läßt sich nach dem erfindungsgemäßen Konzept der Umfang bzw. die Weite des Auseinanderspreizens der gegenüberliegenden Backen durch gezieltes Dimensionieren der größeren Ellipsenachse des Schlüsselquerschnitts so bemessen, daß nur eine dosierte Aufspreizung bewirkt wird, die nicht zu den o.g., unerwünschten Wirkungen führt.

Aus dem europäischen Patent 0 095 062 ist es ferner bekannt, eine der beiden Backen mit einem vorspringenden Anschlag zur Einschubbegrenzung für die Einsätze zu versehen, und den Backen mit dem Anschlag in Einschubrichtung hinter dem ovalen Schlitzbereich derart zu verjüngen, daß er bezüglich des gegenüberliegenden Backens aufspreizbar ist. Davon ausgehend liegt es im Rahmen einer Weiterbildung der Erfindung, daß der ovale Schlitzbereich in Einschubrichtung hinter dem Anschlag angeordnet ist. Bei dieser Anordnung kann im aufgeweiteten Zustand des Klemmschlitzes der Werkzeug-Einsatz entnommen und ausgetauscht werden, und gleichzeitig der Aufspreiz-Schlüssel im ovalen Schlitzbereich eingeklemmt stecken bleiben. Mit der Verjüngung besteht gewissermaßen eine Gelenkstelle, um welche der aufspreizbare Backen durch den Schlüssel mit elliptischem Querschnitt hochgeschwenkt werden kann. Dies kann wegen der gezielt ausgebildeten Gelenkstelle mit relativ geringem Kraftaufwand der Bedienperson erfolgen. Ferner ist Materialverschleiß bei den aufeinanderreibenden Aussparungen und dem elliptischen Schlüsselquerschnitt vermindert, und es kann kostengünstig relativ weicher Werkstoff Verwendung finden.

Der Vereinfachung der Herstellung des Aufspreizschlüssels dient es, wenn in anderer Weiterbildung der Erfindung die unterschiedlich gekrümmten Scheitelbereiche des elliptischen Querschnittsprofils durch vorzugsweise in Einsteckrichtung des Schlüssels verlaufende Kanten voneinander getrennt sind. Damit können die stärker gekrümmten und die schwächer gekrümmten Teile des elliptischen Querschnittsprofils jeweils nach einem bestimmten Krümmungsradius bzw. Krümmungskreis spezifiziert und geformt werden. Der herstellungstechnische Vorteil liegt hier auf der Hand.

Ferner dient es der erleichterten Handhabung, insbesondere des geführten Einsteckens des Aufspreizschlüssels in den ovalen Schlitzbereich, wenn nach einer Erfindungsausbildung die nach größerem Radius verlaufenden Krümmungen des elliptischen Querschnittsprofils in ihren Scheitelbereichen je mit einer Abflachung versehen sind.

Weiter liegt es im Rahmen erfindungsgemäßer Weiterbildungen, den Aufspreizschlüssel in L-artiger Grundform auszuführen, wobei der kleinere L-Schenkel in das genannte, elliptische Querschnittsprofil ausläuft. Die Handhabung wird hier insofern erleichtert, als der Bediener beim Verdrehen des Schlüssels und dem damit verbundenen Aufspreizen des Klemmschlitzes aufgrund des mit dem größeren L-Schenkel zur Verfügung stehenden Hebelarmes Kraftaufwand einspart.

Bei Drehbewegungen des Halters im Arbeitsbetrieb sind darin eingesetzte Werkzeug-Einsätze vor Herausschleudern durch Fliehkräfte zu sichern. Hierzu ist es bekannt (DE-PS 34 16 712) in der Halterung eine Ausnehmung vorzusehen, in die ein Vorsprung 21 des Werkzeugeinsatzes einragt. Wird der Einsatz in den Klemmschlitz der Halterung eingeschoben, so drückt der Vorsprung einen den Klemmschlitz begrenzenden Backen zurück, bis der Vorsprung in die Ausnehmung einrastet. Um hierbei ein übermäßiges Aufspreizen von Klemmbacken und damit verbunden Materialermüdungen überschreitender Streckgrenze usw. zu vermeiden, ist die Kombination der an sich bekannten Anordnung mit dem erfindungsgemäßen elliptischen Querschnittsprofil zum Einstecken des Aufspreizschlüssels besonders vorteilhaft. Hierzu dient ein gegebenenfalls zweiter vorspringender Anschlag am Halter, welcher Anschlag in den Klemmschlitz derart hineinragt, daß er einer Bewegung des Schneideinsatzes in Zugrichtung aus dem Klemmschlitz entgegensteht. Die Anlagefläche dieses gegebenfalls zweiten Anschlages für den Werkzeug-Einsatz kann gegenüber der Zugrichtung rechtwinklig oder schräg verlaufend ausgebildet sein; auch konkav oder konvex gerundete Verläufe für die Anschlag-Anlagefläche sind bei der Erfindung anwendbar.

Nach einer Weiterbildung dieses Gedankens gehört die Anlagefläche der Außenfläche einer Vertiefung oder Ausnehmung in einer aufspreizbaren Backe des Halters an. Damit sind Eingriffs- oder Einrastmöglichkeiten für entsprechende Vorsprünge des Werkzeugeinsatzes geschaffen. Derartige Vorsprünge, die zur Verhinderung des Herausschleuderns in eine Backe des Halters eingerückt sind, zeichnen sich erfindungsgemäß durch im Querschnitt prismatische Oberflächen aus, die am Halter anliegen und mithin eine exakte Klemmung ermöglichen; im Rahmen dieses Gedankens können solche prismatischen Oberflächen entweder konvex vorstehen ("positives Prisma") als auch konkav nach innen geneigt sein, z. B. eine V-Nut bilden ("negatives Prisma").

Weitere Merkmale, Einzelheiten und Vorteile der Erfindung ergeben sich aus der nachfolgenden Beschreibung bevorzugter Ausführungsbeispiele der Erfindung sowie anhand der Zeichnung. Darin zeigen:
- Fig. 1: eine Ansicht auf einen erfindungsgemäßen Aufspreizschlüssel,
- Fig. 2: eine Draufsicht auf den Schlüssel gemäß Fig. 1,
- Fig. 3: eine Fig. 2 entsprechende, jedoch vergrößerte Ansicht mit abgebrochen gezeichnetem Schlüssel,
- Fig. 4: eine Fig. 3 entsprechende Darstellung eines abgewandelten Ausführungsbeispiels,
- Fig. 5: eine Seitenansicht auf ein Werkzeug-Haltersystem mit geklemmtem Einsatz und eingestecktem Aufspreizschlüssel,
- Fig. 6 bis 8: in entsprechender Seitenansicht weitere Varianten von erfindungsgemäßen Werkzeug-Haltersystemen jeweils mit geklemmtem Einsatz und ohne Aufspreizschlüssel,
- Fig. 9 bis 11: Vorder- bzw. Seitenansichten verschiedener Werkzeugeinsätze für erfindungsgemäße Werkzeug-Halterungssysteme, und
- Fig. 12 bis 15: jeweils in Seitenansicht abgebrochen dargestellte Aufspreiz-Backen erfindungsgemäßer Werkzeughalter.

Entsprechend der Seitenansicht der Fig. 1 weist der Aufspreizschlüssel 1 L-artige Grundform auf, wobei der längere L-Schenkel 2 den Griffteil und der kürzere L-Schenkel 3 den Verstellteil bilden. Zum Verstellen ist der kürzere L-Schenkel 3 an seinem freien Ende mit einem Spreizansatz 4 versehen.

Gemäß Fig. 2 - 4, welche den kürzeren L-Schenkel 3 jeweils in der Stirnansicht zeigen, verläuft das Querschnittsprofil des Spreizansatzes 4 jeweils annähernd elliptisch mit der längeren Ellipsenachse a und der kürzeren Ellipsenachse b. Die längere Ellipsenachse a verläuft etwa parallel zum längeren L-Schenkel 2.

Gemäß Fig. 3 und 4 sind beim Querschnittsprofil des Spreizansatzes 4 die Bereiche mit unterschiedlichem Krümmungsradius durch Kanten 5 voneinander abgetrennt bzw. abgegrenzt, die etwa senkrecht zum längeren L-Schenkel 2 verlaufen. Gemäß Fig. 3 sind die nach größerem Radius gekrümmten Teile des Querschnittsprofils in ihren Scheitelbereichen jeweils mit einer Abflachung 6 ausgebildet. Die längeren L-Schenkel 2 des Aufspreizschlüssels 1 sind in Fig. 3 u. 4 jeweils abgebrochen gezeichnet.

In Fig. 5 ist in Seitenansicht das gesamte erfindungsgemäße Halterungssystem veranschaulicht: Die Halterplatte 7 ist in einen oberem Backen 8 und einem unteren Backen 9 gegabelt, welche einander gegenüberliegend den Klemmschlitz 10 begrenzen. In diesen ist ein Werkzeug-Einsatz 11, im gezeichneten Beispiel ein Schneideinsatz, eingesetzt, der rückseitig an eine Anschlagschulter 12 anliegt, welche seinen Einschub begrenzt. Die Anschlagschulter 12 ist an dem oberen Backen 8 vorspringend ausgebildet, wobei sich - in Einschubrichtung 16 gesehen - der obere Backen 8 hinter der Anschlagschulter 12 stark verjüngt und mithin einen Bereich mit der verminderten Dicke d besitzt. Etwa zwischen der Anschlagschulter 12 und dem Bereich der verminderten Dicke d ist der ovale Schlitzbereich angeordnet, der erfindungsgemäß durch Aussparungen 13 im oberen Backen 8 und im unteren Backen 9 gebildet und begrenzt ist. Der Krümmungsradius der Aussparungen 13 entspricht etwa dem Krümmungsradius des stärker gekrümmten, von der längeren Ellipsenachse a durchsetzten Teils des Querschnittsprofils des Spreizansatzes 4. In der in Fig. 5 gezeichneten Winkelstellung des längeren L-Schenkels 2 des Aufspreizschlüssels 1 sind die schwächer gekrümmten Teile des Querschnittsprofils den Aussparungen 13 zugewandt, wobei die Länge der kleineren Ellipsenhalbachse b kleiner ist als der Abstand, in welchem die beiden Aussparungen 13 voneinander liegen. Mithin verbleibt zwischen dem Spreizansatz 4 und den Aussparungen 13 jeweils ein Zwischenraum. Wird der längere L-Schenkel/das Griffteil 2 entsprechend der Schwenkrichtung 14 aus der gezeichneten Stellung in die strichpunktiert angedeutete Stellung bewegt, rücken die jeweils von der längeren Ellipsenachse a durchsetzten Teile des Querschnittsprofils in die komplementär konkaven Aussparungen 13 ein. Da die Länge der längeren Ellipsenachse a den Abstand der Aussparungen 13 voneinander (im nicht aufgespreizten Zustand) übertrifft, erfolgt bei Verstellung gemäß Schwenkrichtung 14 in die mit strichpunktierter Linie angedeutete Stellung eine Aufspreizung des oberen Backens 8 weg vom unteren Backen 9, was durch die verminderte Dicke d des oberen Backens 8 begünstigt wird. Dann kann der Einsatz 11 entsprechend der Zugrichtung 15 aus dem Klemmschlitz 10 herausgezogen werden. In der aufgespreizten Stellung befindet sich das Querschnittsprofil in Eingriff mit den Aussparungen 13, und mithin der Aufspreizschlüssel mit seinem Griffteil 2 in einer stabil gehaltenen Stellung.

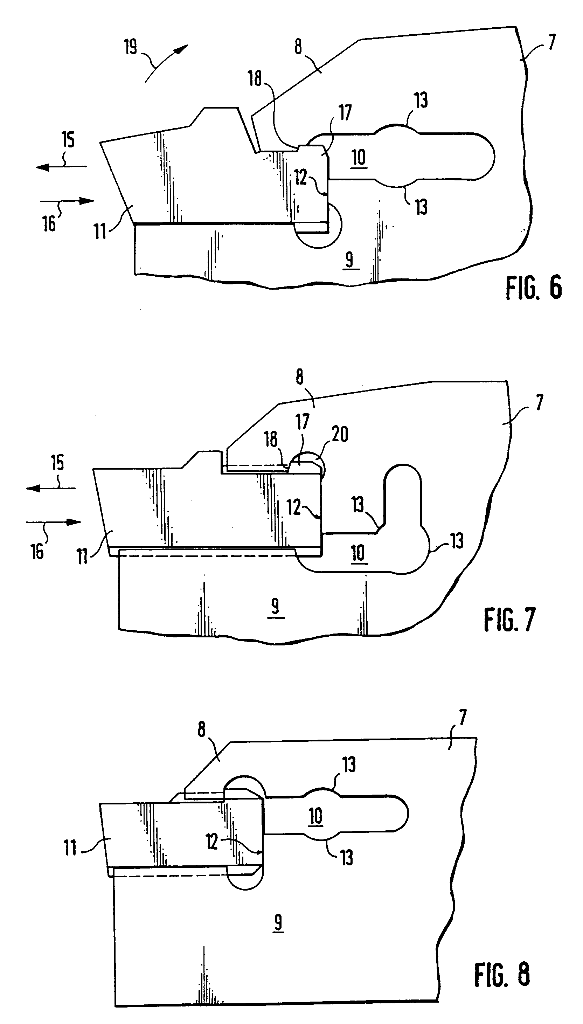

Gemäß Fig. 6 ist der Einsatz 11 an seinem in Zugrichtung 15 gesehen hinterem Ende mit einer Erhebung oder einem Vorsprung 17 versehen, der - mit der Halterplatte 7 eine gemeinsame Anlagefläche bildend - mit einer zweiten Anschlagschulter 18 am oberen Klemmbacken 8 der Halterplatte 7 zusammenwirkt. Wird im Arbeitsbetrieb der Werkzeughalter 7 z. B. in einer Drehrichtung 19 bewegt, werden auf den Einsatz 11 wirkende Fliehkräfte in Zugrichtung 15 aus dem Klemmschlitz 10 ausgelöst. Das Herausschleudern durch Fliehkräfte wird jedoch durch die zweite Anschlagschulter 18 verhindert, indem gegen diese der Einsatz 11 mit seinem Vorsprung 17 in Zugrichtung 15 unbeweglich anliegt. Gemäß Fig. 7 besteht eine weitere Ausbildungsmöglichkeit darin, die genannte zweite Anschlagschulter 18 als Oberflächenteil einer Ausnehmung 20 auszuführen, die den Vorsprung 17 des Einsatzes 11 umgibt. Die der Einschubrichtung 16 entgegenstehende Anschlagschulter 12 ist nach Fig. 7 an der oberen Klemmbacke 8 und nach Fig. 6 und 8 an der unteren Klemmbacke 9 - jeweils im Bereich zwischen der Ausnehmung 20 für den Vorsprung 17 und den Aussparungen 13 für den Aufspreizschlüssel liegend - ausgebildet. In Fig. 7 und 8 jeweils gestrichelt angedeutet sind vorzugsweise mit prismenartigem Querschnitt ausgebildete gemeinsame Anlageflächen 21 von Klemmbacken 8 und 9 sowie Einsatz 11; diese Anlageflächen 21 ergeben, insbesondere im Zusammenwirken mit Vorsprung 17 und zweiter Anschlagschulter 18 sowie erster Anschlagschulter 12, eine zentrierende und präzise Klemmung sowohl in Einsatz-Längsrichtung 15, 16 als auch in Querrichtung.

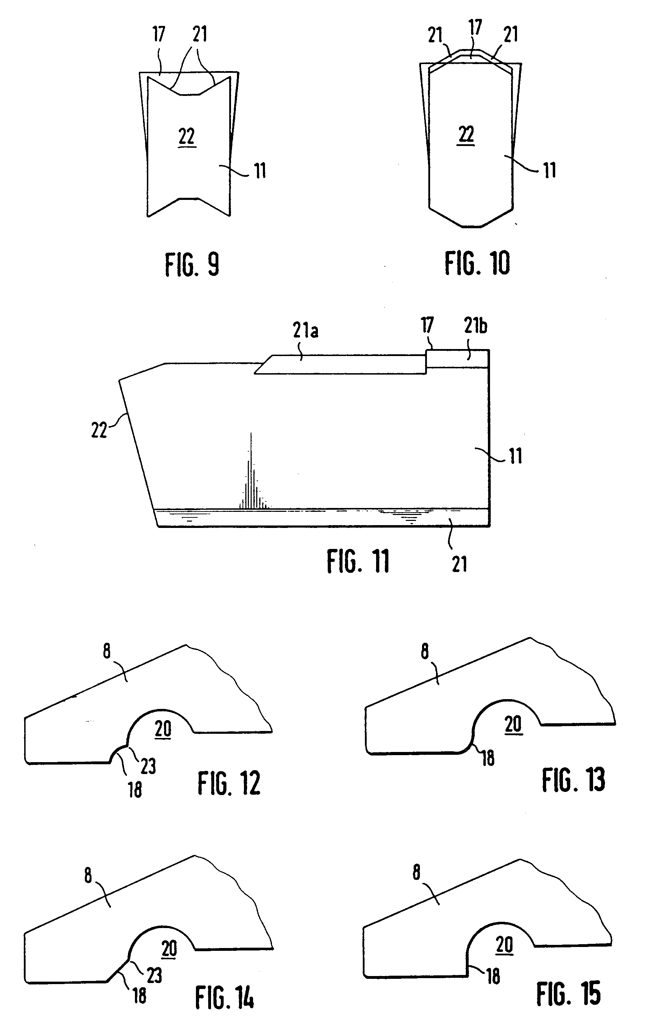

Bei dem in Fig. 9 in Vorder- bzw. Stirnansicht gezeigten (schematisch dargestellten) Werkzeug-Einsatz 11 erstrecken sich vom Vorsprung 17 in (senkrecht zur Zeichenebene verlaufender) Längsrichtung die prismenartigen Anlageflächen 21, welche dabei eine konkave, V-artige Führungsnut für den Einsatz 11 bilden. Der Vorsprung 17 besitzt hier im wesentlichen trapezförmigen Querschnitt und im oberen Bereich überragt die Anlageflächen 21. Eine demgegenüber komplementäre Ausbildung zeigt Fig. 10: Hier ist der Vorsprung 17 mit konvex vorstehenden Anlageflächen 21 ausgeführt, die zueinander prismenartig verlaufen; dagegen besitzt der Schneidkeil 22 des Einsatzes 11 den etwa trapezförmig zulaufenden Querschnitt, der den Vorsprung 17 seitlich überragt. Beim Ausführungsbeispiel nach Fig. 11 ist der Werkzeug-Einsatz 11 auf seiner Oberseite mit zwei zueinander abgestuften, durch die Bildungs des Vorsprungs 17 voneinander separierten Anlageflächen 21a bzw. 21b gebildet. Diese können entsprechend den Ausführungen nach Fig. 9 und 10 ebenfalls prismatisch ausgebildet sein. Für prismatische Anlageflächen 21b des Vorsprungs 17 können mit besonderem Vorteil entsprechend prismatisch ausgebildete Vertiefungen oder Nuten beispielsweise in der oberen Klemmbacke 8 (siehe oben) des Halters 7 ausgebildet sein (nicht gezeichnet).

In den Fig. 12 bis 15 sind im Rahmen der Erfindung liegende Varianten der zeiten Anschlagschulter 18 dargestellt: So kann die Anschlagschulter 18 konkav rund (Fig. 12), konvex rund (Fig. 13), schräg zur Einsatz-Klemmspalt-Längsrichtung 15, 16 (Fig. 14) oder senkrecht zu dieser Längsrichtung 15, 16 (Fig. 15) verlaufen. Dabei geht die zweite Anschlagschulter 18 entweder stetig (Fig. 13 und 15) oder über Kanten 23 in die oben genannte Ausnehmung 20 über.

Vor allem die Ausführungsbeispiele der Erfindung gemäß Figuren 6 bis 15 (mit Vorsprung 17 und zweiter Anschlagschulter 18) eignen sich unter anderem zum Einsatz in Kronenbohrern für Metall-, Holz- und Steinbearbeitung. Bei Verwendung in Schlagbohrmaschinen wird durch die aneinanderliegenden Flächen von Vorsprung 17 und zweiter Anschlagschulter 18 sowie der prismatischen Ausbildung dieser oder sonstiger Anlageflächen zwischen Einsatz 11 und Halter 7 auch Rückstöße bzw. Rückschläge kompensiert. Dies gilt auch für rotierende Werkzeuge, bei denen die Schneidplatten durch die Rotation Fliehkräften ausgesetzt sind.

## Patentansprüche

1. Halter (1) mit Aufspreizschlüssel (1) und einem spanabhebenden Werkzeug-Einsatz (11), insbesondere Stech- oder Schneideinsatz, der in einem Klemmschlitz (10) gehalten ist, dessen gegenüberliegende Backen (8, 9) einen ovalen Schlitzbereich (8, 9, 13) aufweisen, in dem der Aufspreizschlüssel (1) mit elliptischem Querschnittsprofil einsteckbar und verdrehbar ist, wobei der ovale Schlitzbereich (8, 9, 13) aus zwei je in einer Backe (8, 9) gegenüberliegenden Aussparungen (13) gebildet ist, die voneinander in einem Abstand entfernt sind, der betragsmäßig zwischen den Längen der größeren (a) und der kleineren Ellipsenachse (b) liegt, dadurch gekennzeichnet, daß eine Anschlagschulter (18) vorgesehen ist, die als Teil einer Abstufung, Vertiefung oder Ausnehmung (20) in einer der Backen (8, 9, 13) in den Klemmschlitz (10) ragend ausgebildet ist und mit einem Vorsprung des Einsatzes derart im Eingriff ist, daß sie einer Bewegung des Einsatzes (11) in aus dem Klemmschlitz (10) herausführender Zugrichtung (15) entgegensteht und daß die Aussparungen entsprechend den beiden kleineren Scheitelkrümmungskreisen des elliptischen Querschnittsprofils verlaufen, so daß der Aufspreizschlüssel im aufgespreizten Zustand stabil liegt.

2. Halter nach Anspruch 1, bei dem einer (8) der Backen (8, 9) mit einer weiteren vorspringenden Anschlagschulter (12) zur Einschubbegrenzung für die Einsätze (11) versehen ist und sich in Einschubrichtung (16) hinter dem ovalen Schlitzbereich (8, 9, 13) derart verjüngt (d), daß er bezüglich des gegenüberliegenden Backens (9) aufspreizbar ist, dadurch gekennzeichnet, daß der ovale Schlitzbereich (8, 9, 13) in Einschubrichtung (16) hinter der Anschlagschulter (12) angeordnet ist.

3. Halter nach einem der vorhergehenden Ansprüche, dadurch gekennzeichnet, daß die unterschiedlich gekrümmten Scheitelbereiche des elliptischen Querschnittsprofils durch vorzugsweise in Schlüssel-Längsrichtung verlaufende Kanten (5) voneinander abgegrenzt sind.

4. Halter nach einem der vorhergehenden Ansprüche, dadurch gekennzeichnet, daß die nach größerem Radius verlaufenden Krümmungen des elliptischen Querschnittsprofils im Scheitelbereich je mit einer Abflachung (6) versehen sind.

5. Halter nach einem der vorhergehenden Ansprüche, gekennzeichnet durch einen Schlüssel (1) mit L-artiger Grundform, wobei der kleinere L-Schenkel (3) in das elliptische Querschnittsprofil ausläuft.

6. Halter nach einem der vorangehenden Ansprüche, dadurch gekennzeichnet, daß die Anlagefläche der erstgenannten Anschlagschulter (18) für den Werkzeugeinsatz (11) gegenüber benachbarten Halter-Flächen und/oder der Einschub-Auszugsrichtung (15, 16) rechtwinklig, schräg oder konvex oder konkav gerundet verläuft (Fig. 12 - Fig. 15).

7. Halter nach einem der vorangehenden Ansprüche, dadurch gekennzeichnet, daß die gegebenenfalls erstgenannte Anschlagschulter Teil einer Backe (8) ist, die gegenüber der anderen (9) aufspreizbar ist.

## Claims

1. Tool holder (1) with a bracing key (1) and a cutting tool insert (11), in particular piercing or cutting insert, which is held in a clamping slot (10), whose opposing jaws (8, 9) have an oval slot region (8, 9, 13) in which the bracing key (1) with an elliptical cross-section profile is insertable and rotatable, wherein the oval slot region (8, 9, 13) is formed from two opposing recesses (13) in respective jaws (8, 9), the recesses being spaced apart at a distance measuring something between the lengths of the larger (a) and smaller axis (b) of the ellipse, characterised in that a stop shoulder (18) is provided, which is formed as part of a step, hollow or recess (20) in one of the jaws (8, 9, 13) so as to project into the clamping slot (10) and engages with a projection of the insert in such a manner that it counters movement of the insert (11) in a direction of pull (15) leading out of the clamping slot (10), and in that the recesses extend along the two smaller apex circles of curvature of the elliptical cross-section profile, so that the bracing key lies firmly in the braced-apart position.

2. Tool holder according to claim 1, in which one of the jaws (8, 9) is provided with a further projecting stop shoulder (12) for limiting the insertion of the inserts (11) and tapers behind the oval slot region (8, 9, 13) in the insertion direction in such a manner that it can be braced apart from the opposing jaw (9), characterised in that the oval slot region (8, 9, 13) is disposed behind the stop shoulder (12) in the direction of insertion (16).

3. Tool holder according to one of the preceding claims, characterised in that the differently curved apex regions of the elliptical cross-section profile are separated from one another by edges (5) preferably extending in the longitudinal direction of the key.

4. Tool holder according to one of the preceding claims, characterised in that the curvatures of the elliptical cross-section profile extending towards a larger radius are provided in the apex region with a respective flattened region (6).

5. Tool holder according to one of the preceding claims, characterised by a key (1) with a basic L-shape, wherein the smaller flange (3) of the L runs out into the elliptical cross-section profile.

6. Tool holder according to one of the preceding claims, characterised in that the contact face of the first stop shoulder (18) for the tool insert (11) extends in a rectilinear, oblique, convex or concave manner relative to adjacent tool holder surfaces and/or the insertion/withdrawal direction (15, 16) (Fig. 12 - Fig. 15).

7. Tool holder according to one of the preceding claims, characterised in that the optionally first-mentioned stop shoulder is part of a jaw (8) capable of being braced apart from the other (9).

## Revendications

1. Support (1), avec clé d'écartement (1) et une plaquette de coupe d'outil à enlèvement de copeaux (11), en particulier une plaquette de coupe travaillant par pénétration ou découpage, maintenue dans une fente de serrage (10), dont les mâchoires (8, 9 se faisant face présentent une zone de fente (8, 9, 13) ovale, dans laquelle la clé d'écartement (1) à section transversal à profil elliptique peut être enfichée et tournée, la zone de fente (8, 9, 13) ovale étant formée de deux évidements (13) se faisant face, ménagés respectivement dans une mâchoire (8,9), éloignés l'un de l'autre d'une distance dont la valeur est comprise entre la longueur (a) du grand axe et la longueur (b) du petit axe d'ellipse, caractérisé en ce qu'est prévu un épaulement de butée (18) réalisée sous forme de partie d'un décrochement, d'une cavité ou évidement (20), dans l'une des mâchoires (8,9,13), pénétrant dans la fente de serrage (10), et mis en contact avec une saillie de la plaquette de coupe, de manière à l'opposer à tout déplacement de la plaquette de coupe (11) dans une direction de traction (15) la faisant sortir de la fente de serrage (10), et en ce que les évidements s'étendent de manière correspondante aux deux petits cercles de courbure de sommet du profil à section transversale elliptique, de manière que la clé d'écartement soit stable lorsqu'elle est à l'état d'écartement.

2. Support selon la revendication 1, dans lequel l'une (8) des mâchoires (8, 9) est pourvue d'un autre épaulement de butée faisant saillie (12), pour limiter l'enfoncement des plaquettes de coupe (11), et va en s'effilant (d) dans la direction d'enfoncement (16), derrière la zone de fente (8, 9, 13) ovale, de manière qu'elle puisse être écartée par rapport à la mâchoire (9) opposée, caractérisé en ce que la zone de fente (8, 9, 13) ovale est disposée derrière l'épaulement de butée (12) dans la direction d'enfoncement.

3. Support selon l'une des revendications précédentes, caractérisé en ce que les zones de sommet à courbure différente du profil à section transversale elliptique sont délimitées les unes par rapport aux autres au moyen d'arêtes (5) s'étendant de préférence dans la direction longitudinale de la clé.

4. Support selon l'une des revendications précédentes, caractérisé en ce que les courbures à plus grand rayon du profil de section transversale elliptique sont chacune pourvues d'un méplat (6) dans la zone de sommet.

5. Support selon l'une des revendications précédentes, caractérisé par une clé (1) à forme de base en L, la petite branche de L (3) s'étendant dans le profil à section transversale elliptique.

6. Support selon l'une des revendications précédentes, caractérisé en ce que la face d'appui de l'épaulement de butée (18) cité le premier destinée à la plaquette de coupe d'outil (11) est d'allure perpendiculaire, inclinée, ou arrondie de façon convexe ou concave, par rapport aux faces de support voisines et/ou au dispositif d'enfoncement/d'extraction (15, 16) (figures 12 à 15).

7. Support selon l'une des revendications précédentes, caractérisé en ce que l'épaulement de butée éventuellement cité le premier fait partie d'une mâchoire (8), pouvant être écartée par rapport à l'autre (9).
